(19) Europäisches Patentamt / European Patent Office / Office européen des brevets

(11) **EP 1 495 262 B1**

(12) **EUROPEAN PATENT SPECIFICATION**

(45) Date of publication and mention
of the grant of the patent:
**15.04.2015 Bulletin 2015/16**

(21) Application number: **03744726.5**

(22) Date of filing: **14.03.2003**

(51) Int Cl.:
*F23D 14/04* (2006.01)     *F23C 9/00* (2006.01)
*F23D 14/66* (2006.01)     *F23L 7/00* (2006.01)
*F23M 5/02* (2006.01)     *F23M 11/04* (2006.01)
*F23C 6/04* (2006.01)     *F23C 7/00* (2006.01)
*F23D 14/08* (2006.01)     *F23D 14/58* (2006.01)

(86) International application number:
**PCT/US2003/007906**

(87) International publication number:
**WO 2003/081131 (02.10.2003 Gazette 2003/40)**

(54) **BURNER SYSTEM WITH IMPROVED FLUE GAS RECIRCULATION**

BRENNERSYSTEM MIT VERBESSERTER RAUCHGASRÜCKFÜHRUNG

SYSTEME DE BRULEUR AVEC RECIRCULATION AMELIOREE DE GAZ DE COMBUSTION

(84) Designated Contracting States:
**AT BE BG CH CY CZ DE DK EE ES FI FR GB GR
HU IE IT LI LU MC NL PT RO SE SI SK TR**

(30) Priority: **16.03.2002 US 365226 P
16.03.2002 US 365151 P
16.03.2002 US 365235 P
16.03.2002 US 365234 P
16.03.2002 US 365218 P
16.03.2002 US 365227 P
16.03.2002 US 365138 P**

(43) Date of publication of application:
**12.01.2005 Bulletin 2005/02**

(73) Proprietor: **ExxonMobil Chemical Patents Inc.
Baytown, TX 77520 (US)**

(72) Inventors:
• **STEPHENS, George
Humble, TX 77346 (US)**

• **SPICER, David, B.
Houston, TX 77056 (US)**
• **BURY, Mark, E.
Acton, MA 01720 (US)**
• **GAUBA, Gautam
Marlborough, MA 01752 (US)**

(74) Representative: **Mareschal, Anne et al
ExxonMobil Chemical Europe Inc.
IP Law Europe
Hermeslaan 2
1831 Machelen (BE)**

(56) References cited:
EP-A- 0 374 423     US-A- 2 813 578
US-A- 2 983 312     US-A- 5 092 761
US-A- 5 098 282     US-A- 5 472 341

**Description**

This invention relates to an improvement in a burner system such as those employed in high temperature furnaces in the steam cracking of hydrocarbons. More particularly, it relates to a system employing flue gas recirculation (FGR) to achieve a reduction in $NO_x$ emissions.

As a result of the interest in recent years to reduce the emission of pollutants from burners used in large furnaces and boilers, burner design has undergone substantial change. In the past, improvements in burner design were aimed primarily at improving heat distribution. Increasingly stringent environmental regulations have shifted the focus of burner design to the minimization of regulated pollutants.

Oxides of nitrogen ($NO_x$) are formed in air at high temperatures. These compounds include, but are not limited to, nitrogen oxide and nitrogen dioxide. Reduction of $NO_x$ emissions is a desired goal to decrease air pollution and meet government regulations. In recent years, a wide variety of mobile and stationary sources of $NO_x$ emissions have come under increased scrutiny and regulation.

The rate at which $NO_x$ is formed is dependent upon the following variables: (1) flame temperature, (2) residence time of the combustion gases in the high temperature zone and (3) excess oxygen supply. The rate of formation of $NO_x$ increases as flame temperature increases. However, the reaction takes time and a mixture of nitrogen and oxygen at a given temperature for a very short time may produce less $NO_x$ than the same mixture at a lower temperature, over a longer period of time.

One strategy for achieving lower $NO_x$ emission levels is to install a $NO_x$ reduction catalyst to treat the furnace exhaust stream. This strategy, known as Selective Catalytic Reduction (SCR), is very costly and, although it can be effective in meeting more stringent regulations, it represents a less desirable alternative to improvements in burner design.

Burners used in large industrial furnaces may use either liquid or gaseous fuel. Liquid fuel burners mix the fuel with steam prior to combustion to atomize the fuel to enable more complete combustion, and mix combustion air with the fuel at the point of combustion.

Gas fired burners can be classified as either premix or raw gas, depending on the method used to combine the air and fuel. They also differ in configuration and the type of burner tip used.

Raw gas burners inject fuel directly into the air stream, such that the mixing of fuel and air occurs simultaneously with combustion. Since airflow does not change appreciably with fuel flow, the air register settings of natural draft burners must be changed after firing rate changes. Therefore, frequent adjustment may be necessary, as explained in detail in U.S. Patent No. 4,257,763, which patent is incorporated herein by reference. In addition, many raw gas burners produce luminous flames.

Premix burners mix some or all of the fuel with some or all of the combustion air prior to combustion. Since premixing is accomplished by using the energy present in the fuel stream, airflow is largely proportional to fuel flow. As a result, therefore, less frequent adjustment is required. Premixing the fuel and air also facilitates the achievement of the desired flame characteristics. Due to these properties, premix burners are often compatible with various steam cracking furnace configurations.

Floor-fired premix burners are used in many steam crackers and steam reformers primarily because of their ability to produce a relatively uniform heat distribution profile in the tall radiant sections of these furnaces. Flames are non-luminous, permitting tube metal temperatures to be readily monitored. Therefore, a premix burner is the burner of choice for such furnaces. Premix burners can also be designed for special heat distribution profiles or flame shapes required in other types of furnaces.

In gas fired industrial furnaces $NO_x$ is formed by the oxidation of nitrogen drawn into the burner with the combustion air stream. The formation of $NO_x$ is widely believed to occur primarily in regions of the flame where there exist both high temperatures and an abundance of oxygen. Since ethylene furnaces are amongst the highest temperature furnaces used in the hydrocarbon processing industry, the natural tendency of burners in these furnaces is to produce high levels of $NO_x$ emissions.

One technique for reducing $NO_x$ that has become widely accepted in industry is known as staging. With staging, the primary flame zone is deficient in either air (fuel-rich) or fuel (fuel-lean). The balance of the air or fuel is injected into the burner in a secondary flame zone or elsewhere in the combustion chamber. As is well known, a fuel-rich or fuel-lean combustion zone is less conducive to $NO_x$ formation than an air-fuel ratio closer to stoichiometry. Staging results in reducing peak temperatures in the primary flame zone and has been found to alter combustion speed in a way that reduces $NO_x$. Since $NO_x$ formation is exponentially dependent on gas temperature, even small reductions in peak flame temperature can dramatically reduce $NO_x$ emissions. However this must be balanced with the fact that radiant heat transfer decreases with reduced flame temperature, while CO emissions, an indication of incomplete combustion, may actually increase as well.

In the context of premix burners, the term primary air refers to the air premixed with the fuel; secondary, and in some cases tertiary, air refers to the balance of the air required for proper combustion. In raw gas burners, primary air is the air that is more closely associated with the fuel; secondary and tertiary air are more remotely associated with the fuel. The upper limit of flammability refers to the mixture containing the maximum fuel concentration (fuel-rich) through which a flame can propagate.

Thus, one set of techniques achieves lower flame temperatures by using staged-air or staged-fuel burners to lower flame temperatures by carrying out the initial combustion at far from stoichiometric conditions (either fuel-rich or air-rich) and adding the remaining air or fuel only after the flame has radiated some heat away to the fluid being heated in the furnace.

Another technique for achieving lower flame temperature involves diluting the fuel-air mixture with inert material. Flue-gas (the products of the combustion reaction) or steam are commonly used diluents. Such burners are classified as FGR (flue-gas-recirculation) or steam-injected, respectively.

U.S. Patent No. 5,092,761 discloses a method and apparatus for reducing $NO_x$ emissions from premix burners by recirculating flue gas. Flue gas is drawn from the furnace through recycle ducts by the inspirating effect of fuel gas and combustion air passing through a venturi portion of a burner tube. Air flow into the primary air chamber is controlled by dampers and, if the dampers are partially closed, the reduction in pressure in the chamber allows flue gas to be drawn from the furnace through the recycle ducts and into the primary air chamber. The flue gas then mixes with combustion air in the primary air chamber prior to combustion to dilute the concentration of oxygen in the combustion air, which lowers flame temperature and thereby reduces $NO_x$ emissions. The flue gas recirculating system may be retrofitted into existing premix burners or may be incorporated in new low $NO_x$ burners.

Analysis of burners of the type described in U.S. Patent No. 5,092,761 has indicated the flue-gas-recirculation (FGR) ratio is generally in the range 5- 10% where FGR ratio is defined as:

$$FGR \ ratio \ (\%) = 100[G/(F+A)]$$

where

      G = Flue-gas drawn into venturi, (Ib)
      F = Fuel combusted in burner, (Ib), and
      A = Air drawn into burner, (Ib).

The ability of existing burners of this type to generate higher FGR ratios is limited by the inspirating capacity of the fuel orifice/gas spud/venturi combination. Although further closing or partially closing of the primary air dampers can further reduce the pressure in the primary air chamber and thereby enable increased FGR ratios, the resultant reduction of primary air flow is such that insufficient oxygen is present in the venturi for acceptable burner stability.

European Patent Publication No. 0,374,423 A proposes a design for an atmospheric burner that includes a feed means for supplying gaseous fuel having at least one feed aperture disposed centrally in the region of the opening in an open-faced pipe. Fuel flows axially into the pipe under pressure and combustion air is drawn through the pipe opening on the venturi principle and, jointly with the combustion air, emerges from a burner jet that is adjacent the other end of the pipe. The use of a particularly complex flue gas return pipe that discharges into the aperture portion of the pipe is also proposed.

European Patent Publication No. 1,096,202 A1 proposes fuel dilution methods and an apparatus aimed at NOx reduction. Proposed in this application is a method which includes providing a chamber outside of the burner and furnace for mixing flue gases from the furnace with fuel gas, discharging the fuel gas in the form of a fuel jet into the mixing chamber so that flue gases from the furnace are drawn into the chamber and mixed with and dilute the fuel gas therein and conducting the resulting mixture of flue gases and fuel gas to the burner wherein the mixture is combined with the combustion air and burned in the furnace. The flue gas is shown to be drawn from a furnace exhaust duct.

Disadvantages associated with the proposal of European Patent Publication No. 1,096,202 A1 include the fact that fuel is introduced outside of the burner and furnace in a separate chamber, an arrangement that could pose leakage problems. In addition, it is a less than optimal arrangement to pass a potentially explosive mixture through an external duct associated with the furnace. Another disadvantage is the apparent difficulty of retrofitting the proposal to existing burners. Finally, while steam is used in connection with the teachings of European Application No. 1,098,202 A1, it Is only used for the purpose of reducing NOx and not for increasing the available motive force to transport flue gas into the burner

Therefore, what is needed is a burner for the combustion of fuel and air, yielding further reductions in NOx emissions without any of the actual or inherent drawbacks described above.

The present invention is directed to a method and system for reducing NOx emissions from burners of furnaces such as those used in steam cracking. In accordance with a broad aspect of the invention, there is provided a system for reducing NOx emissions from burners of furnaces such as those used in steam cracking. According to the present invention, a burner for the combustion of fuel in a furnace is presented, said burner comprising:

(a) a primary air chamber;
(b) a burner tube having an upstream end, a downstream end and a venturi intermediate said upstream and downstream ends, said venturi including a throat portion having substantially constant internal cross-sectional dimensions such that the ratio of the length to maximum internal cross-sectional dimension of said throat portion is at least 3;
(c) a fuel spud located adjacent the upstream end of said burner tube, for introducing fuel into said burner tube;
(d) a burner tip mounted on the downstream end of said burner tube adjacent a first opening in the furnace;
(e) at least one passageway having a first end at a second opening in the furnace and a second end adjacent the upstream end of said burner tube; and
(f) means for drawing flue gas from said furnace, through said at least one passageway, in response to an inspirating effect of uncombusted fuel exiting the fuel spud, said uncombusted fuel flowing through said burner tube from its upstream end towards its downstream end;

wherein said fuel spud includes means for increasing the inspirating effect of uncombusted fuel exiting said fuel spud and further comprising a centering plate for centering said fuel spud in alignment with said burner tube, said centering plate being perforated to permit flow therethrough from said primary air chamber.

In accordance with one specific embodiment of the invention, the burner of the present invention allows improved flue gas recirculation while minimizing any accompanying reduction in burner stability.

In accordance with another specific embodiment of the invention, the burner of the present invention permits higher flue gas recirculation rates to be employed, thus reducing $NO_x$ emissions.

In accordance with another specific embodiment of the invention, the burner of the present invention is designed to optimize the inspiration efficiency of the fuel orifice/burner tube combination.

In accordance with another specific embodiment of the invention, the burner of the present invention reduces the frictional flow losses in the flue gas recirculation duct and the temperature of the fuel/air/flue-gas mixture is advantageously reduced so as to also enable higher flue gas recirculation ratios (FGR) to be utilized, yielding further reductions in $NO_x$ emissions, e.g., by lowering flame temperature and oxygen levels.

In accordance with another specific embodiment of the invention, the system of the present invention is capable of utilizing flue gas for recycling, which such flue gas is drawn from a furnace exhaust stack, and wherein the system of the present invention does not require, or minimizes the need for, the use of an external fan.

In accordance with another specific embodiment of the invention, the burner of the present invention better enables the use of cooler, lower oxygen content, flue gas for recycling.

The invention is further explained in the description that follows with reference to the drawings illustrating, by way of non-limiting examples, various embodiments of the invention wherein:

FIG. 1 illustrates an elevation partly in section of an embodiment of the burner of the present invention;
FIG. 2 is an elevation partly in section taken along line 2--2 of FIG. 1;
FIG. 3 is a plan view taken along line 3--3 of FIG. 1;
FIG. 4 is a schematic illustration of a burner according to one embodiment of the present invention;
FIG. 5 is a perspective view of a burner tip in one embodiment of the present invention;
FIGS. 6A and 6B are plan views of the burner tip according to the embodiment illustrated in FIG. 5 and the tip of a conventional burner, respectively;
FIG. 7 is a top plan view of a centering plate used in an embodiment of the burner of the present invention;
FIG. 8 is an elevation partly in section of an embodiment of the burner of the present invention illustrating an external passageway;
FIG. 9 is a schematic illustration of an embodiment of the present invention employing multiple burners in series and sharing an external exhaust;
FIG. 10 is a plot of $NO_x$ emissions as a function of external FGR, in percent;
FIG. 11A is a cross-sectional view of a prior art fuel spud;
FIG. 11B is a cross-sectional view of one embodiment of an improved fuel spud in accordance with the present invention;
FIG. 11C is a cross-sectional view of another embodiment of an improved fuel spud in accordance with the present invention;
FIG. 11D is a cross-sectional view of yet another improved fuel spud in accordance with the present invention;
FIG. 11E is a cross-sectional view of another embodiment of an improved fuel spud in accordance with the present invention;
FIG. 12A illustrates a conventional fuel gas control system used in furnaces employing burners prior art burner systems;

FIG. 12B illustrates a fuel supply control system in accordance with an embodiment of the present invention;

FIG. 13A and FIG. 13B are sectional views comparing, respectively the venturi of a conventional burner tube with the venturi of a burner tube of a burner in accordance with one embodiment of the invention;

FIG. 14 illustrates an elevation partly in section of an embodiment of a flat-flame burner of the present invention;

FIG. 15 is an elevation partly in section of the embodiment of a flat-flame burner of FIG. 14 taken along line 15--15 of FIG. 14.

FIG. 16A is a top view of one embodiment of a burner tip for use in a flat-flame burner; and

FIG. 16B is a top view of another embodiment of a burner tip for use in a flat-flame burner.

## DETAILED DESCRIPTION OF THE PREFERRED EMBODIMENTS

Although the present invention is described in terms of a burner for use in connection with a furnace or an industrial furnace, it will be apparent to one of skill in the art that the teachings of the present invention also have applicability to other process components such as, for example, boilers. Thus, the term furnace herein shall be understood to mean furnaces, boilers and other applicable process components.

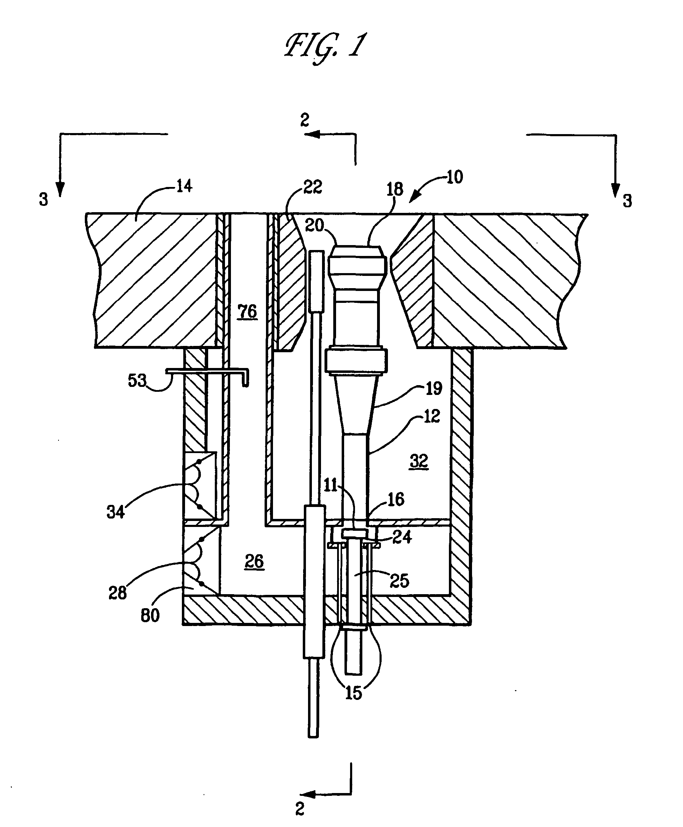

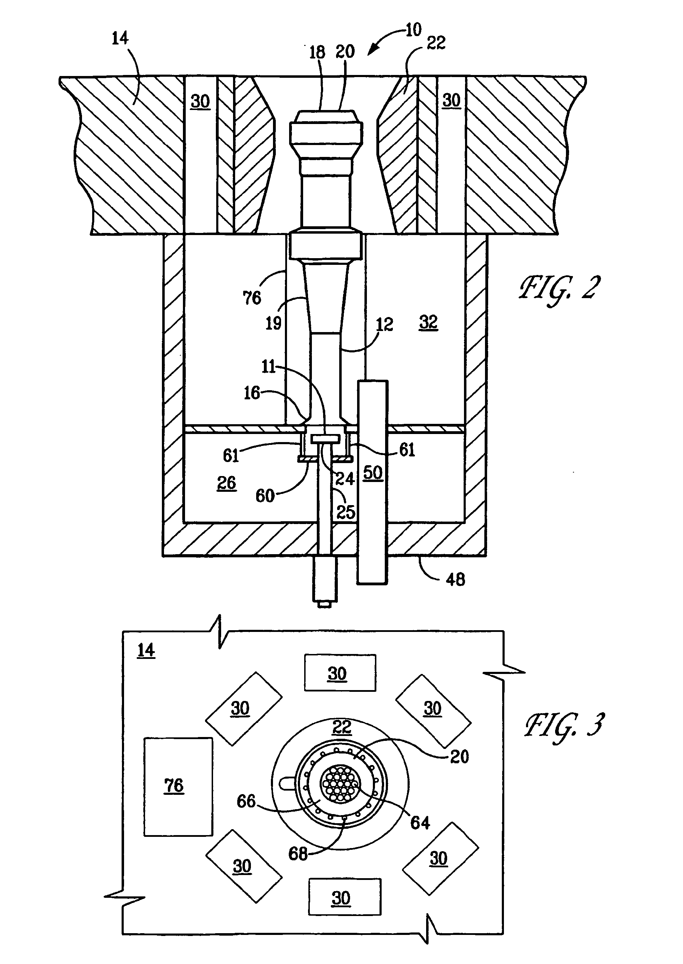

Referring particularly to FIGS. 1-3, a burner 10 includes a freestanding burner tube 12 located in a well in a floor 14 of a furnace. The burner tube 12 includes an upstream end 16, a downstream end 18 and a venturi 19. Burner tip 20 is located at the downstream end 18 of tube 12 and is surrounded by an annular tile 22. A fuel orifice 11, which may be located within a gas spud 24, is at the top end of a gas fuel riser 25 and is located at the upstream end 16 of tube 12 and introduces fuel into the burner tube 12. Fresh or ambient air is introduced into a primary air chamber 26 through an adjustable damper 28 to mix with the fuel at the upstream end 16 of the burner tube 12 and pass upwardly through the venturi portion 19. Combustion of the fuel and fresh air occurs downstream of the burner tip 20. As may be appreciated, a motive force is provided by the flow of fuel into venturi portion 19, inducing the flow of flue gas recirculation, air and optionally steam into the burner tube 12. Optionally, one or more steam injection tubes 15 may be provided and positioned in the direction of flow so as to add to the motive force provided by venturi portion 19 for inducing the flow of recirculated flue gas and air into the burner tube 12.

A plurality of air ports 30 originate in a secondary air chamber 32 and pass through the furnace floor 14 into the furnace. Fresh or ambient air enters the secondary air chamber 32 through adjustable damper 34 and passes through the staged air ports 30 into the furnace to provide secondary or staged combustion, as described in U.S. Patent No. 4,629,413, which patent is hereby incorporated herein by reference.

As preferred, flue gas is drawn from the furnace through passageway 76 into a primary air chamber 26 by the inspirating effect of the fuel from the fuel orifice 11, which may be contained within spud 24, passing through the venturi portion 19.

Unmixed low temperature fresh or ambient air, having entered the secondary air chamber 32 through the dampers 34 and having passed through the air ports 30 into the furnace, is also drawn through passageway 76 into a primary air chamber 26 by the inspirating effect of the fuel passing through the venturi portion 19. The passageway 76 is preferably metallic and is employed as an FGR duct. The mixing of the staged or secondary air with the flue gas lowers the temperature of the hot flue gas flowing through the passageway 76 and thereby substantially increases the life of the passageway 76 and allows use of this type burner to reduce $NO_x$ emission in high temperature cracking furnaces having flue gas temperature above 1040 °C (1900 °F) in the radiant section of the furnace.

U.S. Patent No. 5,092,761 contemplates locating a steam injection point(s) at the base of the venturi for the purpose of reducing $NO_x$. This is also known as $deNO_x$ steam injection. In accordance with an aspect of the present invention, means for injecting steam in the form of $deNO_x$, steam injection tube(s) 53 are located in the passageway 76 upstream of the air source 80. This location results in a more homogenous combination of flue gas, steam, air or mixtures thereof and air entering the burner venturi 19. A more homogeneous mixture can result in higher venturi capacity, higher flue gas entrainment capacity, lower flame temperature and lower $NO_x$. This location also tends to reduce the temperature of the metallic FGR duct 76, which extends the life of the duct.

A lighting port 50 is provided in the burner plenum 48, both to allow inspection of the interior of the burner assembly, and to provide access for lighting of the burner through lighting element (not shown). The burner plenum 48 may be covered with mineral wool soundproofing and wire mesh screening to provide insulation therefore.

As is shown in FIGS. 1, 2 and 4, a small gap exists between the burner tip 20 and the annular tile 22. By keeping this gap small, the bulk of the secondary staged air is forced to enter the furnace through staged air ports 30 located some distance from the primary combustion zone, which is located immediately on the furnace side of the burner tip 20. It has been discovered through testing that increasing the gap between the burner tip 20 and the annular tile 22 raises overall $NO_x$ but also raises overall flame stability. The annular gap should be sized such that it is small enough to minimize $NO_x$, and large enough to maintain adequate flame stability.

Flue gas is drawn from near the furnace floor through the passageway 76 by the inspirating effect of fuel passing through venturi portion 19 of burner tube 12. In this manner, the primary air and flue gas are mixed in primary air chamber 26, which is prior to the point of combustion. The amount of inert material mixed with the fuel is raised, thereby reducing the flame temperature, and as a result, reducing $NO_x$ emissions.

Closing or partially closing damper 28 restricts the amount of fresh air that can be drawn into the primary air chamber 26 and thereby provides the vacuum necessary to draw flue gas from the furnace.

It is preferred that a mixture of from 20% to 80% flue gas and from 20% to 80% ambient air should be drawn through the passageway 76. It is particularly preferred that a mixture of 50% flue gas and 50% ambient air be employed. The desired proportions of flue gas and ambient air may be achieved by proper placement and/or design of the passageway 76 in relation to the air ports 30. That is, the geometry of the air ports, including but not limited to their distance from the burner tube, the number of air ports, and the size of the air ports, may be varied to obtain the desired percentages of flue gas and ambient air.

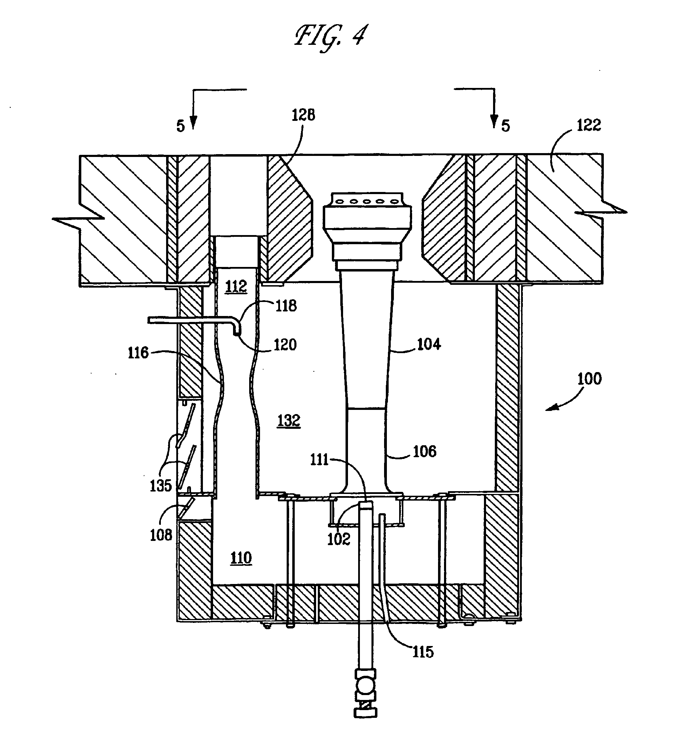

FIG. 4 illustrates another embodiment of the invention for using steam injection to enhance the flue gas recirculation ratio of a burner 100. With reference to FIG. 4, fuel exits a fuel orifice 111, which may be located within fuel spud 102, at a high velocity at the entrance to a venturi portion 104 of a burner tube 106, thus inspirating air from a primary air chamber 110 into the venturi portion 104. Partially closing the primary air dampers 108 generates a sub-ambient pressure in the primary air chamber 110. A flue gas recirculation (FGR) duct 112 connects the furnace to the primary air chamber 110 of the burner 100, thus permitting the flow of the flue gas into the primary air chamber 110 to be mixed with fuel from the fuel orifice 111 and primary air from the dampers 108.

The flue gas recirculation duct 112 has a venturi section 116. Steam for $NO_x$ reduction is injected at the entrance of the venturi section 116 through an orifice, which may be located within spud 120 of steam injection tube 118 for generating a high velocity steam jet at the entrance to venturi section 116. The steam jet/venturi combination inspirates flue gas from the floor 122 of the furnace into the primary air chamber 110 of the burner 100. With this arrangement, the pressure in the primary air chamber 110 does not need to be reduced as far below ambient as does the burner of U.S. Patent No. 5,092,761, the mixture of flue gas, air and steam is more homogeneous and a greater volume of flue gas can be recycled, providing higher FGR ratios and lower $NO_x$ emissions, while still maintaining sufficient primary air flow to assure good burner stability.

Optionally, one or more steam injection tubes 115 may be provided and positioned in the direction of flow so as to add to the motive force provided by venturi portion 104 for inducing the flow of flue gas, air and mixtures thereof into the burner tube 106.

A plurality of staged air ports (not shown) originates in a secondary air chamber 132 and passes through the furnace floor 122 into the furnace. Fresh or ambient air enters the secondary air chamber 132 through adjustable dampers 135 and passes through the staged air ports (not shown) into the furnace to provide secondary or staged combustion.

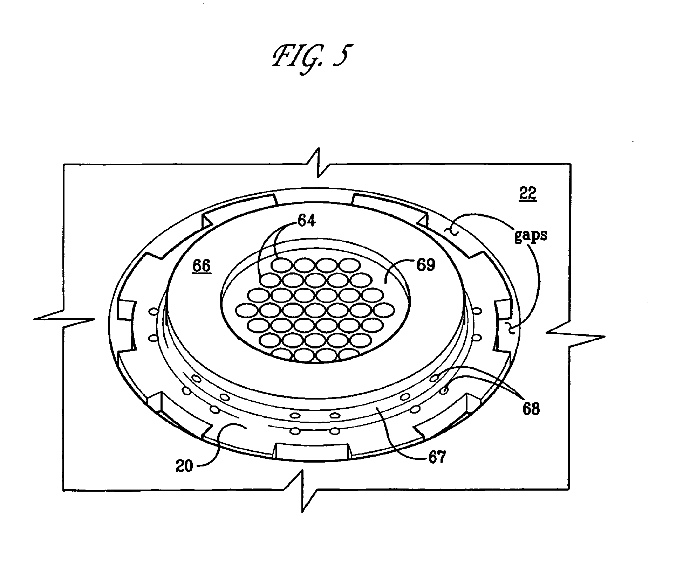

According to another aspect of the present invention, a novel burner tip arrangement is next discussed. Referring now generally to FIGS 1-3 and specifically to FIG. 5, the upper end 66 of burner tip 20 includes a plurality of main ports 64 in a centrally disposed end surface 69 and a plurality of side ports 68 in an annular side surface 67. In operation, the side ports 68 direct a portion of the fuel/air mixture across the face of the annular tile 22, whereas the main ports 64 direct the major portion of the mixture into the furnace. Mating of the lower end of burner tip 20 to the burner tube 12 can be achieved by swaging or, more preferably, by welding or threaded engagement.

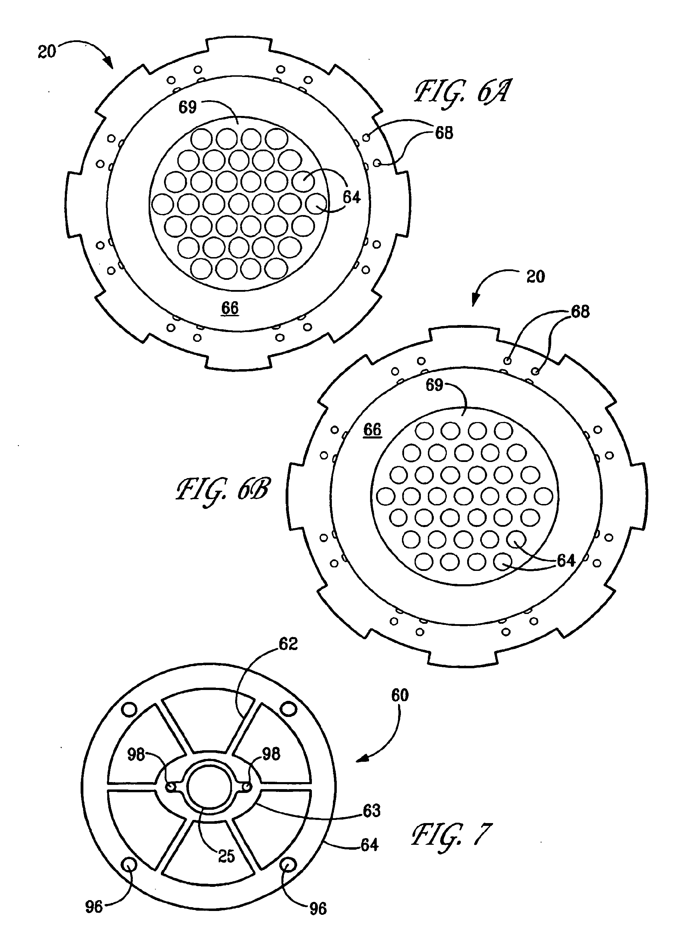

Referring now to FIGS. 6A and 6B, the upper end 66 of a burner tip in accordance with an embodiment of the present invention is shown in FIG. 6A. FIG. 6B shows the upper end 66 of a conventional burner tip. It will be seen that the number and size of the main ports 64 in the centrally disposed end surface 69 of the burner tip in accordance with an embodiment of the present invention are significantly larger than those of the conventional tip. In particular, the number and dimensions of the main ports 64 in the tip of the invention are such that the total area of the main ports 64 in the end surface 69 is at least 2.2 $mm^2$ per kilojoules/sec (1.0 $in^2$ per million (MM) Btu/hr) and preferably at least 2.6 $mm^2$ per kilojoules/sec (1.2 $in^2$ per MM Btu/hr) burner capacity. In contrast, in the conventional burner tip shown in FIG. 6B, the total area of the main ports 64 in the end surface 69 is less than 2.2 $mm^2$ per kilojoules/sec (1.0 $in^2$ per million (MM) Btu/hr) burner capacity. In one practical embodiment of a burner tip according to the invention, wherein the design firing rate of the burner is 1.8 kilojoules/sec (6.0 MMBtu/hr), the total area of the main ports 64 in the end surface 69 is 54.2 $cm^2$ (8.4 $in^2$) whereas, in the conventional burner tip for use at the same design firing rate, the total area of these openings is only 37.4 $cm^2$ (5.8 $in^2$).

Intuitively, it would be expected that raising the tip flow area would proportionally reduce tip velocity, but instead, it is found that the drop in velocity can be mitigated by the fact that raising tip flow area raises FGR.

Increasing the total area of the main ports 64 in the burner tip 20 increases the flow area of the burner tip 20, which in turn enables higher FGR, rates to be induced without increasing the velocity for the fuel/air mixture flowing through the tip. In this way, stable operation of the burner can be retained with higher FGR rates.

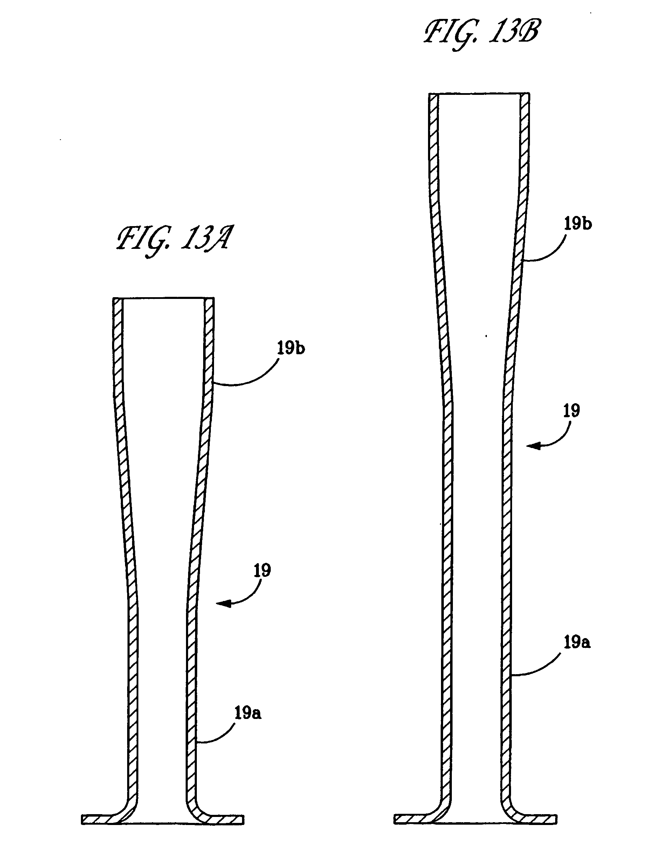

In a preferred embodiment of the invention, the venturi 19 of the burner shown in FIG. 13B and discussed below is used in combination with the burner tip feature just discussed. As will be discussed further below, the increased flue gas recirculation resulting from the venturi 19 of FIG. 13B reduces the lowering of tip velocity that results with the increased opening area in the tip. A longer venturi throat also promotes better flow development and hence improved mixing of the fuel/air stream prior to the mixture exiting the burner tip 20. Better mixing of the fuel/air stream also contributes to $NO_x$ reduction by producing a more evenly developed flame and hence reducing peak temperature regions.

According to another aspect of the present invention, a novel centering plate design is next discussed. With reference to FIGS. 1-3 generally and FIG. 7 specifically, support members 61 suspend a perforated centering plate 60 from the roof of the primary air chamber 26. As shown in FIG. 7, a specific embodiment of the perforated centering plate 60 has a plurality of spokes 62 interconnecting a riser centering member 63 and a peripheral ring support member 64. The riser centering member 63 is positioned about the gas riser 25 for maintaining the fuel spud 24 in proper alignment with the inlet to the venturi portion 19. The ring member 64 has a plurality of holes 96 for use in securing the centering plate 60 to the support members 61.

In one embodiment of the present invention, centering plate 60 also contains a pair of holes 98 to permit a corresponding pair of steam injection tubes 15 to pass through centering plate 60 when such steam injection tubes 15 are present.

As noted above, centering plate 60 is perforated to permit flow therethrough of air from the primary air chamber 26, which avoids flow losses that result from a normally tortuous flow pattern caused by a presently used solid centering plate. These flow losses are avoided because the perforated centering plate design smoothes out the flow vectors entering the venturi portion 19 of the burner tube 12 to enable higher venturi capacity, higher flue gas recirculation rate, lower flame temperature and lower $NO_x$ production.

Although centering plate 60 as shown in FIG. 7 is illustrated as circular and although a circular shape is the preferred embodiment of the present invention, it will be understood by those of skill in the art that the centering plate may be formed into many other shapes, including, for example, oval, square, or triangular without departing from the scope or spirit of the present invention.

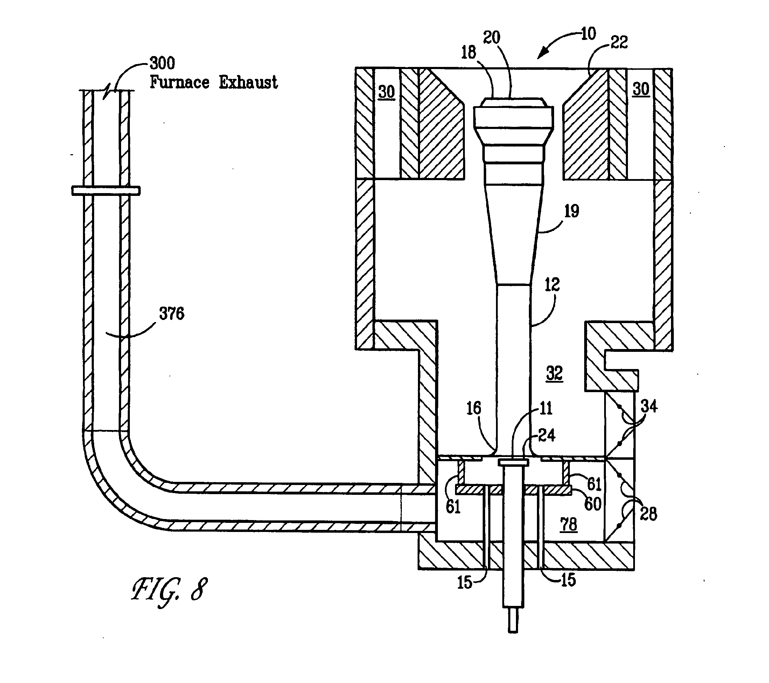

According to yet another aspect of the present invention, an novel external FGR duct arrangement is now discussed in connection with FIG. 8. As preferred, flue gas having a temperature less than 370°C (700°F) is drawn from furnace exhaust 300 through an external recirculation (FGR) duct 376 into a primary air chamber 78 by the inspirating effect of the fuel from the fuel orifice 11, which may be located within fuel spud 24, passing through the venturi portion 19. Drawing flue gas from the exhaust stream rather than directly from the furnace box adjacent the burner flame provides a lower temperature flue gas, thereby substantially increasing the effectiveness of the flue gas to lower flame temperature, which results in reduced $NO_x$ emissions.

Thus, it can be seen that, by use of this aspect of the invention, $NO_x$ emissions may be reduced in a burner without the use of fans or special burners. The flue gas recirculation system of the present invention can also easily be retrofitted to existing burners because the motive force from the fuel orifice 11, which may be located in fuel spud 24, serves to minimize or eliminate the need for the installation of an external fan when retrofitting.

A further advantage over systems drawing flue gas from the radiant box of the furnace lies in the fact that externally drawn FGR typically has a lower oxygen content. Flue gas sourced externally from the furnace exhaust stack will typically have a 2-3 volume % $O_2$ content. By comparison, it has been found that flue gas recirculated from the base of the burner flame has a typical $O_2$ content of 10-15 volume%. Recirculated flue gas with a lower $O_2$ content is a more effective diluent for reducing $NO_x$ because it is less reactive, i.e., more inert.

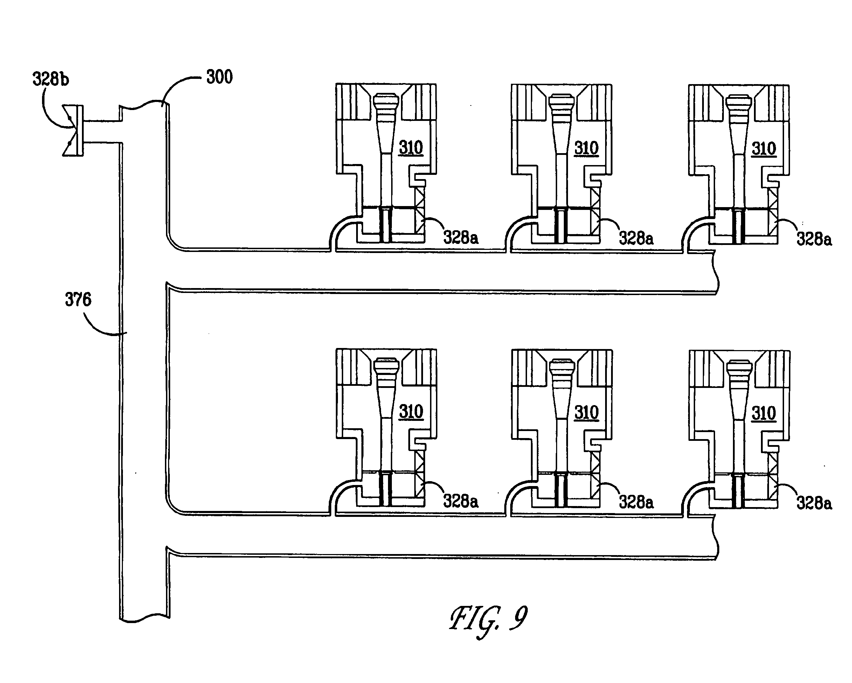

FIG. 9 is a schematic illustration of the present invention wherein multiple burners of the types described herein are included in a furnace and share the same FGR duct 376 and furnace exhaust 300. As shown, primary air may be admitted to burners 310 through primary dampers 328a, through damper(s) 328b or through a combination of primary dampers 328a and damper(s) 328b. While FIG. 9 shows six burners 310, any number of burners, whether more or less, in series or parallel, may be used and remain within the spirit and scope of the present invention. It will be understood by one of skill in the art that several burners will be located within the furnace, all of which feed furnace exhaust 300 and external FGR duct 376. The benefit with respect to improved inspiration produced by the present invention serves to increase the motive force available to draw flue gas through FGR duct 376, eliminating or minimizing the need for an external fan to supply adequate levels of FGR.

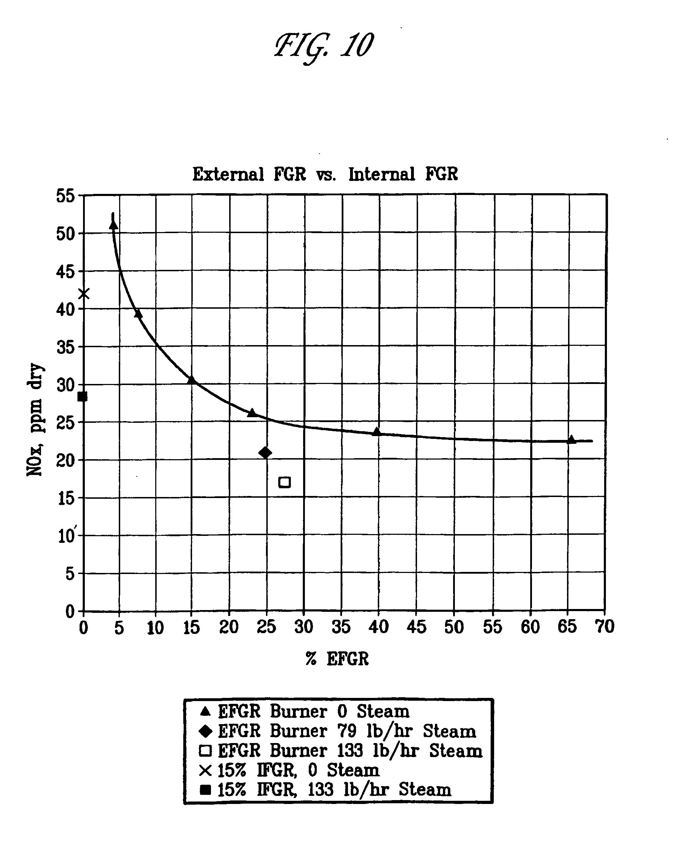

FIG. 10 presents a plot of $NO_x$ emissions as a function of external flue gas recirculation level, with varying levels of steam injection. As shown, these results are compared with results obtained using 15% internal FGR. This figure demonstrates the benefits of this aspect of the present invention.

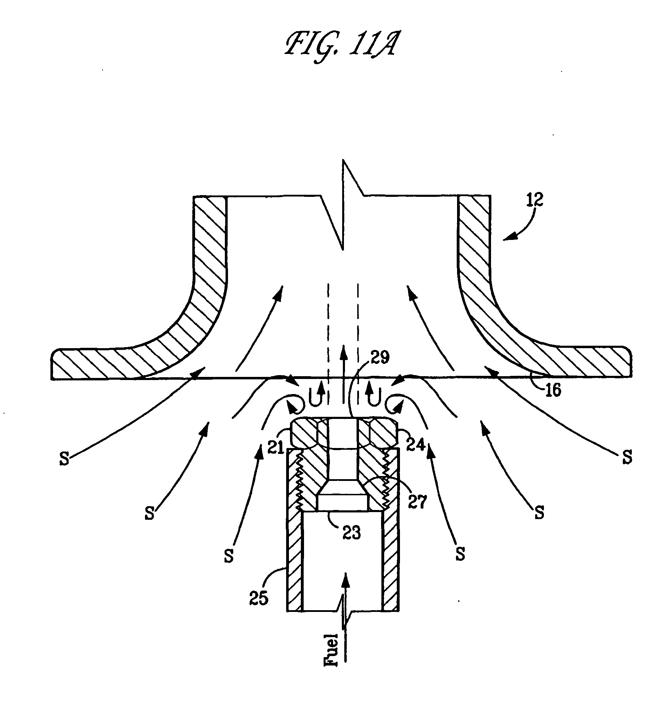

Referring now to FIG. 11A, a conventional fuel spud 24 is shown. Fuel spud 24 is affixed to the outlet end of fuel riser 25, preferably by threads, as shown. Fuel spud 24 is aligned with the upstream end 16 of burner tube 12, so that fuel exiting the outlet end 29 of fuel spud 24 will be drawn into the upstream end 16 of burner tube 12, together with primary air and recirculated flue gas. As shown, the inner diameter of the inlet end 23 of fuel spud 24 transitions to a smaller diameter at outlet end 29 through the use of transition section 27. The outer surface 21 of fuel spud 24 is exposed to the venturi inlet flow stream, represented by streamlines S. Outer surface 21 is in the form of a hex-shaped nut, for ease in installation.

While outer surface 21 may be helpful in the installation of fuel spud 24, as is illustrated by streamlines S of FIG. 11A, when air is drawn into the venturi inlet 16, flow past the edges of fuel spud 24 generates a zone of eddies and turbulence immediately adjacent to the highest velocity portion of fuel spud 24. The energy dissipated in this zone of eddies has been discovered to reduce the inspirating efficiency of the fuel spud 24 and burner tube 12 venturi combination. This inefficiency has been found to limit the FGR ratio achievable in the burner.

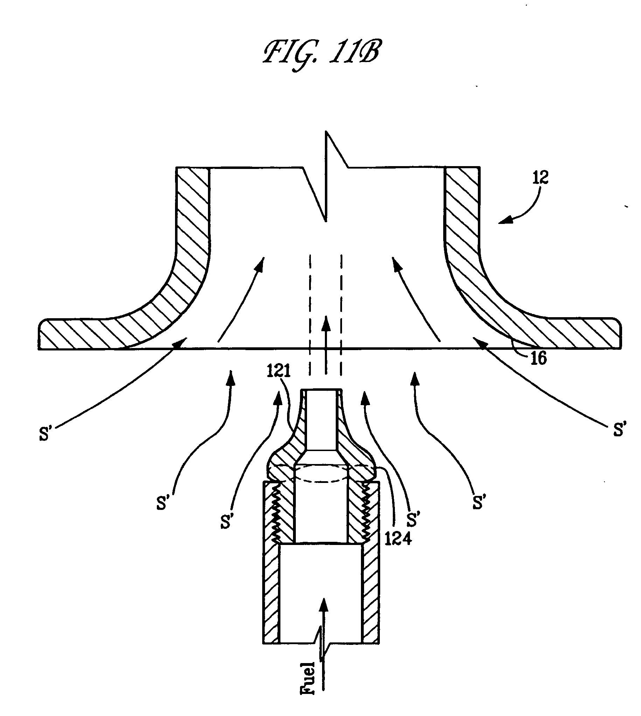

FIG. 11B depicts a fuel spud 124, designed in accordance with one embodiment of the present invention. As shown, fuel spud 124 employs a smoothly profiled outer surface 121 to eliminate flow separation and eddies as the air and recycled flue-gas pass over fuel spud 124 into upstream end 16 of burner tube 12. As schematically depicted by flow streamlines S', eddies and turbulence are minimized, thus improving the inspirating efficiency of the system. As a result of this improvement, higher FGR ratios and lower NOx emissions can be achieved.

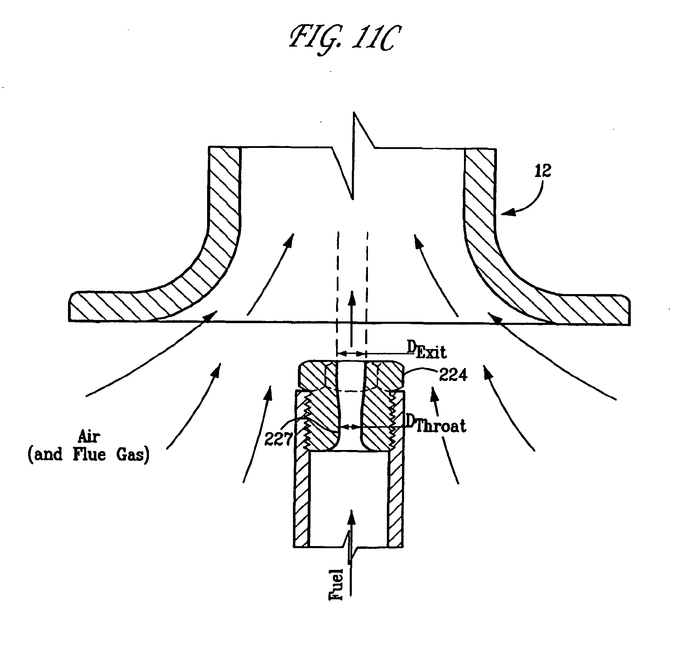

FIG. 11C illustrates another fuel spud 224, designed in accordance another embodiment of the present invention. As may be appreciated by one skilled in the art, the fuel spud/burner tube venturi combination inspirates air (or air plus flue-gas) via the transfer of momentum from the fuel to the air (or air plus flue-gas) in the burner tube 12 venturi.. The momentum of a flowing stream is defined as the product of the mass flow rate and velocity. In a burner, the mass flow rate of the fuel stream is defined by the heat release required of the burner. The diameter of the fuel spud is established by the available upstream pressure in the fuel gas supply system. Thus, the momentum achieved in the fuel jet as it exits the fuel spud is a function of the exit velocity. For a fuel spud of the geometry shown in FIG. 11A or FIG. 11B, the laws of compressible gas flow suggest that the flow at the exit of the fuel spud cannot exceed Mach 1, that is, the speed of sound in the gas stream.

If the exit velocity of the gas jet could be increased above Mach 1, the inspirating effect of the fuel spud/burner tube venturi combination could be increased. In the case of a burner employing FGR, higher FGR ratios could be achieved and $NO_x$ emissions reduced. The use of a converging-diverging nozzle can generate a supersonic gas jet at the exit of the fuel spud. Such geometries are variously known as "Laval nozzles" or "critical flow venturis."

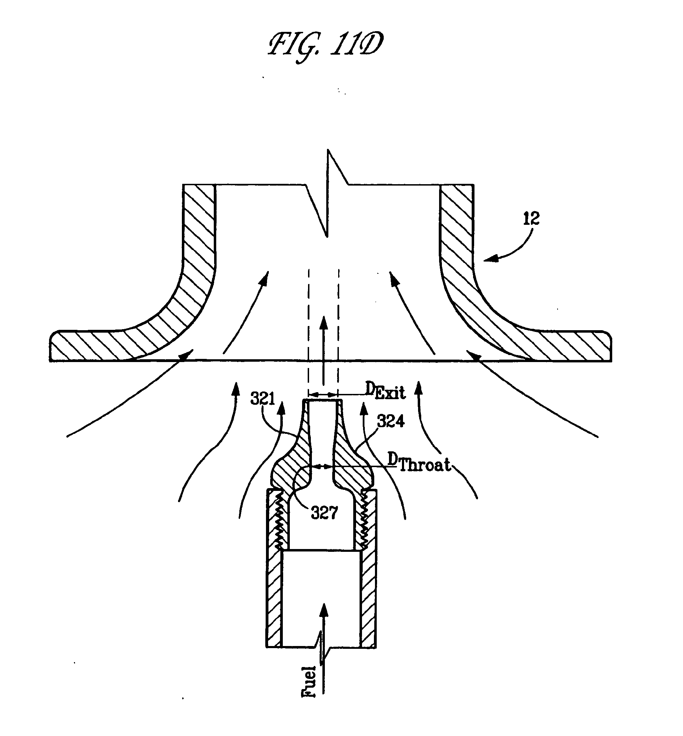

Referring now to FIGS. 11C and 11D, gas-spuds 224 and 324 are shown, each employing Laval nozzles 227 and 327, respectively. Additionally, fuel spud 324 advantageously employs both the Laval nozzle internal profile 327, and the low-eddy external surface profile 321, described above.

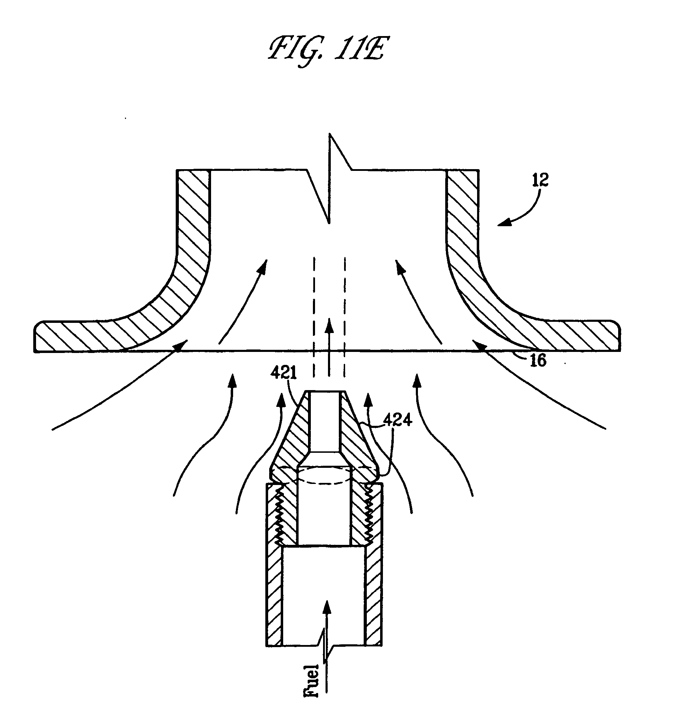

FIG. 11E depicts a fuel spud 424, designed in accordance with another preferred form. As shown, fuel spud 424 employs a smoothly profiled outer surface 421, which takes the form of a frustum of a cone, to eliminate flow separation and eddies as the air and recycled flue-gas pass over fuel spud 424 into upstream end 16 of burner tube 12. As schematically depicted by flow streamlines $S^{iv}$, eddies and turbulence are minimized, thus improving the inspirating efficiency of the system. As a result of this improvement, higher FGR ratios and lower $NO_x$ emissions can be achieved.

As may be appreciated by those skilled in the art, the fuel spud designs of the present invention can be incorporated in new burners or can be retrofitted into existing burners. Unlike prior designs, use of the fuel spud designs of the present invention serve to substantially improve the inspiration characteristics of the fuel spud/burner tube venturi combination, increasing the ability to utilize higher levels of FGR and reduce $NO_x$ emissions.

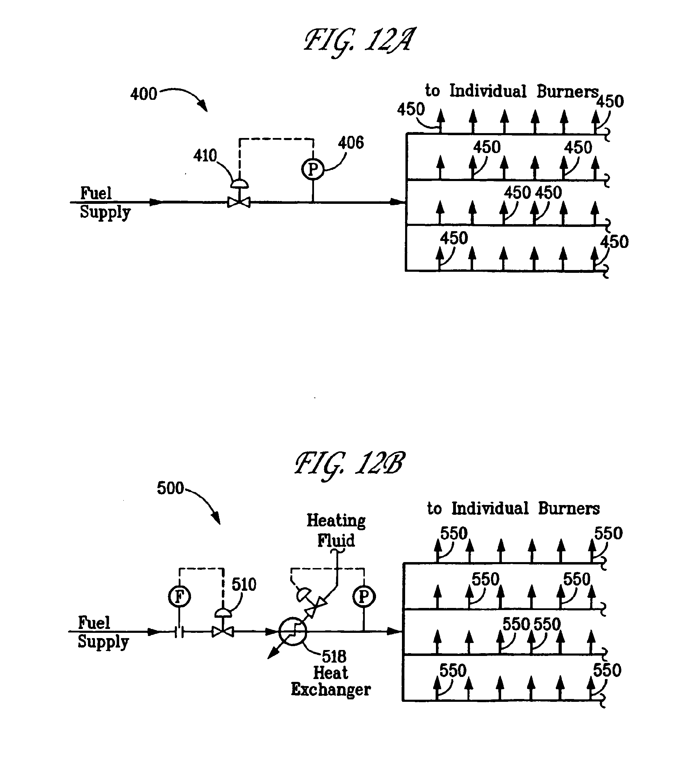

In one embodiment of the present invention, it is desirable to heat the fuel prior to feeding it to the fuel spud. This can yield optimal results, even as the heat release rate on the burner is reduced. As such, a novel method of variable fuel preheat and fuel supply control was developed to eliminate this limitation of the Laval nozzle fuel spud and is shown in FIG. 12B. FIG. 12A illustrates a conventional fuel gas control system 400. The fuel pressure 406 upstream of the fuel spuds of burners 450 is controlled by a pressure control valve 410. Generally, the set-point for the pressure controller is reset by a higher level control application, such as the desired heat release, desired process outlet temperature or the like. In the fuel supply control system 500 of the present invention, shown in FIG. 12B, the fuel passes through a heat exchanger 518 prior to entering the burners 550. The quantity of fuel delivered to the burners 550 is controlled by a flow controller 510 rather than a pressure controller. The fuel flow controller 510 may be reset by a higher level controller such as heat release, desired process outlet temperature or the like. The temperature to which the fuel is heated is determined by the pressure at the burner inlets to provide optimum spud performance desired.

Referring now to FIG. 13A, a venturi 19 of a conventional burner of the type disclosed in U.S. Patent No. 5,092,761 includes a relatively short throat portion 19a that is of substantially constant internal cross-sectional dimensions along its length and a divergent cone portion 19b, wherein the ratio of the length to maximum internal cross-sectional dimension of the throat portion 19a is less than 3, typically 2.6. As shown in FIG. 13B, a venturi 19 of a burner tube of a burner in accordance with one embodiment of the invention also includes a throat portion 19a of substantially constant internal cross-sectional dimensions and a divergent cone portion 19b. However, the throat portion 19a of the burner of said one embodiment is significantly longer than that of the conventional burner, as shown in FIG. 13A such that the ratio of the length to maximum internal cross-sectional dimension of the throat portion 19a is at least 3, preferably from 4 to 10, more preferably from 4.5 to 8 still more preferably from 6.5 to 7.5 and most preferably from 6.5 to 7.0. The internal surface of the throat portion 19a of the burner of said one embodiment is preferably cylindrical.

Increasing the ratio of length to internal cross-sectional dimensions in the throat portion of the venturi is found to reduce the degree of flow separation that occurs in the throat and cone portions of the venturi which increases the capacity of the venturi to entrain flue gas thereby allowing higher flue gas recirculation rates and hence reduced flame temperature and $NO_x$ production. A longer venturi throat also promotes better flow development and hence improved mixing of the fuel gas/air stream prior to the mixture exiting the burner tip. Better mixing of the fuel gas/air stream also contributes to $NO_x$ reduction by producing a more evenly developed flame and hence reducing peak temperature regions.

According to yet another aspect of the present invention, the cross-section of the FGR duct 76 shown in FIG. 1 is substantially rectangular, typically with its minor dimension ranging from 30% to 100% of its major dimension. Conveniently, the cross sectional area of the FGR duct 76 ranges from 11 to 26 $mm^2$/kJ/sec (5 to 12 square inches/ million (MM) Btu/hr) burner capacity and, in a practical embodiment, from 219 to 387 $cm^2$ (34 $in^2$ to 60 $in^2$). In this way the FGR duct 76 can accommodate a mass flow rate of at least 43 g/sec per kilojoules/sec (100 pounds per hour per MMBtu/hr) burner capacity, preferably at least 56 g/sec per kilojoules/sec (130 lbs/hr per MMBtu/hr) burner capacity, and still more preferably at least 86 g/sec per kilojoules/sec (200 lbs/hr per MMBtu/hr) burner capacity. Moreover, FGR ratios of greater than 10% and up to 15% or even up to 20% can be achieved. This arrangement for FGR duct 76 may be applied in combination with the various other teachings and embodiments described herein.

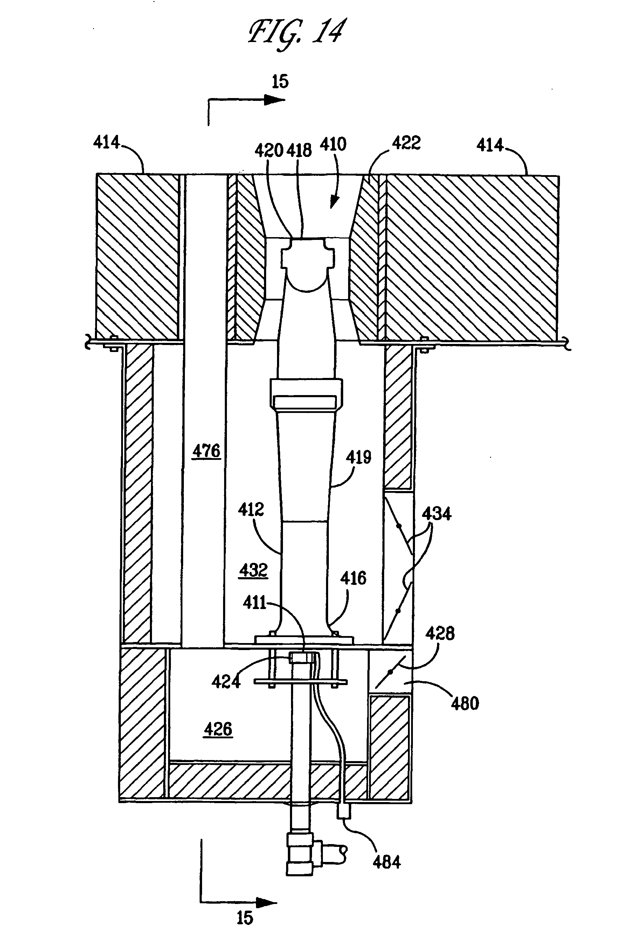

The teachings and various embodiments disclosed herein can alternatively be applied, as would be apparent to one of skill in the art, to flat-flame burners, as will now be described by reference to FIGS. 14, 15, 16A and 16B.

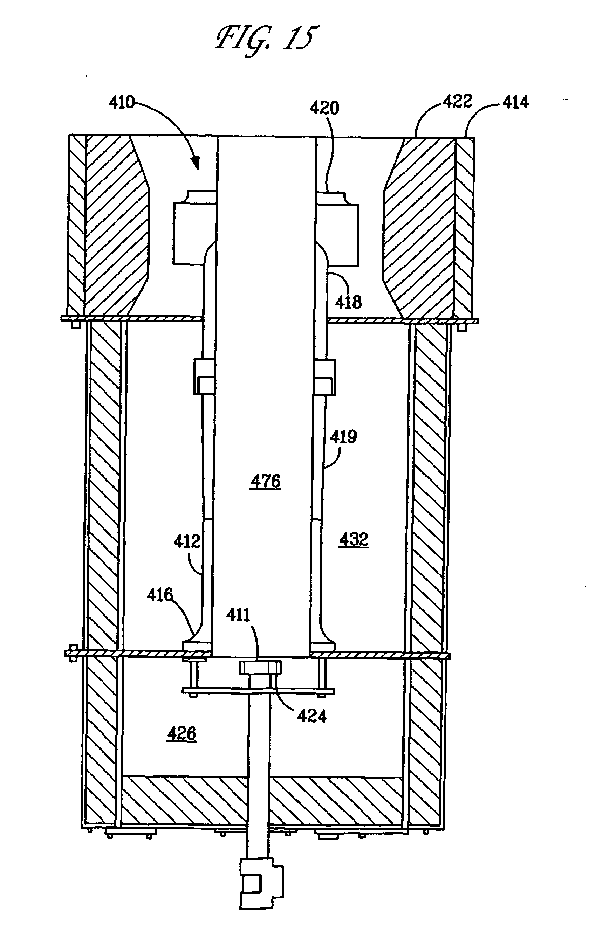

As shown in FIGS. 14 and 15, a burner 410 includes a freestanding burner tube 412 located in a well in a furnace floor 414. Burner tube 412 includes an upstream end 416, a downstream end 418 and a venturi portion 419. Burner tip 420 is located at downstream end 418 and is surrounded by a peripheral tile 422. A fuel orifice 411, which may be located within gas spud 424, is located at upstream end 416 and introduces fuel gas into burner tube 412. Fresh or ambient air may be introduced into primary air chamber 426 through dampers 428 to mix with the fuel gas at upstream end 416 of burner tube 412. Combustion of the fuel gas occurs downstream of burner tip 420. Fresh secondary air enters secondary chamber 432 through dampers 434.

In order to recirculate flue gas from the furnace to the primary air chamber, a flue gas recirculation passageway 476 is formed in furnace floor 414 and extends to primary air chamber 426, so that flue gas is mixed with fresh air drawn into the primary air chamber from opening 480 through dampers 428. Flue gas is drawn through passageway 476 by the inspirating effect of fuel gas passing through venturi portion 419 of burner tube 412. In this manner, primary air and flue gas are mixed in primary air chamber 426, which is prior to the point of combustion. Therefore, the amount of inert material mixed with the fuel is raised, thereby reducing the flame temperature. Optionally, one or more steam injection tubes 484 may be provided and positioned in the direction of flow so as to add to the motive force provided by venturi portion 419 for inducing the flow of recirculated flue gas and air into the burner tube 412.

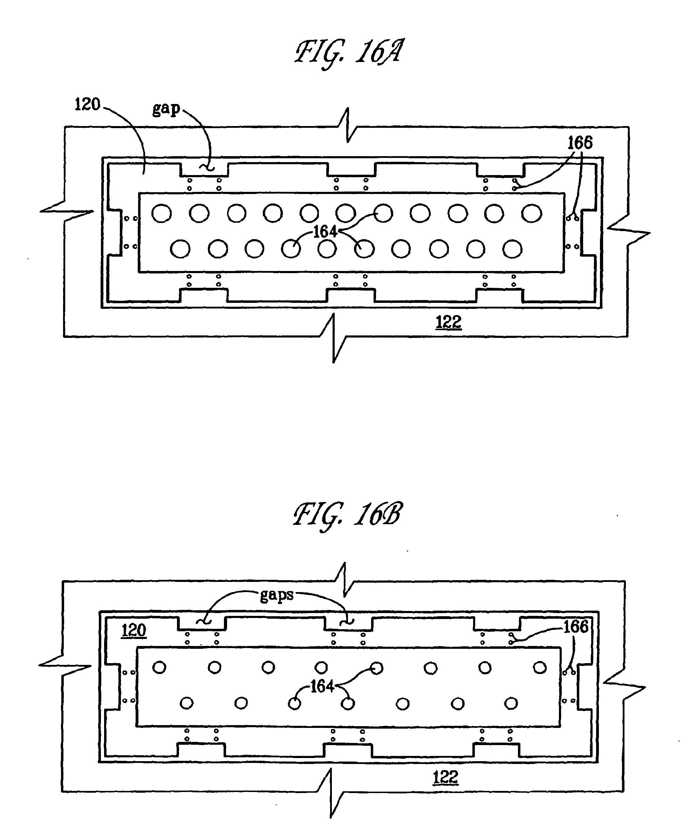

As is shown in FIGS. 16A and 16B, a small gap exists between the burner tip 120 and the burner tile 122. By keeping this gap small, the bulk of the secondary staged air is forced to enter the furnace through staged air ports (not shown) located some distance from the primary combustion zone, which is located immediately on the furnace side of the burner tip 120. This gap may be peripheral in configuration, as shown, or alternatively, comprise a series of spaced gaps peripherally arranged.

Now that various embodiments and features of the present invention have been described, such various embodiments and features being available for use in various combinations and permutations as would be understood by one of skill in the art, data is now presented which illustrates the benefits of the various teachings herein.

First, data illustrative of the benefits of employing the steam injection teachings herein is presented.

Example 1

This example explores the advantages of a burner of the type depicted in FIG. 4, as modeled based on material balance calculations. The following burner condition was studied: fuel rate = 116 kg/hr (255 lb/hr) of methane fuel gas, with a fuel pressure upstream of the fuel orifice of 342-515 kPa (35-50 psig). The fuel orifice/fuel spud is preferably of the type disclosed herein in connection with FIGS. 11A-11E.

A total of 2297 kg/hr (5,063 lb/hr) of air (dry basis) is consumed in the burner 100, permitting combustion of the fuel with a slight excess of air. A total of 415 kg/hr (914 lb/hr) of air is drawn into the primary air chamber 110. Steam is injected at a rate of 54 kg/hr (120 lb/hr) through the steam injection tube 118, and the steam pressure upstream of the orifice 120 may be in the range 240-790 kPa (20-100 psig) to generate a high velocity steam jet. A suitable typical pressure may be 377 kPa (40 psig).

The action of the high velocity steam jet in the FGR venturi section 116 would inspirate approximately 360 kg/hr (800 lb/hr) of flue gas into the FGR duct 112, providing an FGR ratio of approximately 15%. The embodiments of the instant invention are designed to generate FGR ratios in the range 10-25%.

Example 2

To further demonstrate the benefits of the present invention, a burner, of the type depicted in FIG. 4 was tested. The fuel orifice/fuel spud was the type disclosed in FIG. 11E. The burner of this example also employed flue gas recirculation as described herein and was operated at a firing rate of 1760 kJ/sec (6 MMBTU/hr), using a fuel gas

comprised of 30% $H_2$/70% natural gas, without steam injection. A very stable flame was observed, with $NO_x$ emissions measured at 67 ppm.

Example 3

In this example, the burner of Example 2 was used. Once again, the burner employed flue gas recirculation as described herein and was operated at a firing rate of 1760 kJ/sec (6 million BTU/hr), using a fuel gas comprised of 30% $H_2$/70% natural gas, with steam injected to the FGR duct (only) at a rate of 65 kg/hr (143 lb/hr). A very stable flame was observed, with $NO_x$ emissions measured at 42 ppm.

Example 4

Again, the burner of Example 2 was used, employing flue gas recirculation of the type described herein. The burner was operated at a firing rate of 1760 kJ/sec (6 MMBTU/hr), using a fuel gas comprised of 30% $H_2$/70% natural gas, with steam injected in the region of the burner tube venturi (only) at a rate of 65 kg/hr (143 lb./hr.). A very stable flame was observed, with $NO_x$ emissions measured at 37 ppm.

Next, the particular benefits of the burner spud teachings of the present invention are illustrated through the following Examples 5 to 8.

Example 5

The following example demonstrates that using a converging/diverging (Laval) nozzle fuel spud can increase gas velocity (and hence momentum). The following burner condition was studied: fuel rate = 158 kg/hr (348 lb/hr); fuel composition = $CH_4$; fuel upstream temperature = 21 °C (60 °F); fuel upstream pressure = 446 kPa (50 psig). A fuel spud throat diameter of 0.8534 cm (0.3360 in) was selected. Three different nozzle outlet diameters were evaluated for their impact on exit pressure and exit velocity. The results of the analysis follow:

| Nozzle Exhaust Diameter | Gas Pressure at Nozzle Exit | Gas velocity at Nozzle Exit |
| --- | --- | --- |
| 0.98 cm (0.3855 in) | 0.0 kPa (0.0 psig) | 2210 km/hr (2014 ft/sec) |
| 0.92 cm (0.3611 in) | 44.6 kPa (5.0 psig) | 2011 km/hr (1833 ft/sec) |
| 0.88 cm (0.3467 in) | 89.2 kPa (10.0 psig) | 1832 km/hr (1670 ft/sec) |

As may be seen, the highest gas velocity achievable occurred at a nozzle exhaust diameter of 0.98 cm (0.3855 in) (gas exit pressure = 0.0 kPa (0.0 psig)). This increase in velocity and momentum directionally improves the inspirating capability of the fuel spud/venturi combination, permitting the FGR ratio to be increased on a burner so equipped.

Examples 6-8

These examples demonstrate that using a variable fuel preheating system to control fuel supply rates can eliminate the primary problem associated with variations in firing rates in a converging/diverging (Laval) nozzle fuel spud.

Example 6

Fueling rate for the optimized nozzle of Example 5 (nozzle exhaust diameter of 0.98 cm (0.3855 in) was reduced to 106 kg/hr (233 lb./hr.), while using the same fuel ($CH_4$) and maintaining fuel upstream temperature at 21 °C.(60 °F), fuel upstream pressure at 297 kPa (28.4 psig), spud throat diameter at 0.85 cm (0.3360 in).

At this fueling rate, the following results are predicted:

| Optimum Exhaust Diameter | Gas Pressure at Nozzle Exit | Gas velocity at Nozzle Exit |
| --- | --- | --- |
| 0.90 cm (0.3534 in) | 0.0 kPa (0.0 psig) | 1926 km/hr (1,755 ft/sec) |

Example 7

To take the optimum nozzle design for the conditions of Example 6 and increase the firing rate to the level of Example 5 (158 kg/hr (348 lb./hr.)) would be predicted to yield the following results:

| Nozzle Exhaust Diameter | Gas Pressure at Nozzle Exit | Gas velocity at Nozzle Exit |
|---|---|---|
| 0.90 cm (0.3534 in) | 62.44 kPa(7.0 psig) | 1938 km/hr (1,766 ft/sec) |

Example 8

The data below demonstrate that heating the fuel gas prior to feeding it to the fuel spud can yield optimal results, even as the heat release rate on the burner is reduced.

The fueling rate for the optimized nozzle of Example 5 (nozzle exhaust diameter of 0.98 cm (0.3855 in) was reduced to 106 kg/hr (233 lb/hr), while using the same fuel ($CH_4$) and increasing the fuel upstream temperature to 377 °C (710 °F). Fuel upstream pressure was maintained at 446 kPa (50 psig) and spud throat diameter was held at 0.85 cm (0.3360 in).

At these conditions, the following results are predicted:

| Optimum Exhaust Diameter | Gas Pressure at Nozzle Exit | Gas velocity at Nozzle Exit |
|---|---|---|
| 0.98 cm (0.3855 in) | 0.0 kPa0.0 psig | 3315 km/hr (3,021 ft/sec) |

Next, data illustrating the benefits of the venturi illustrated in FIG. 13B is presented.

Examples 9-14

Table 1 below summarizes the geometry of a conventional premix burner with FGR (Example 9) and five premix burners (Examples 10-14) having modified venturi throat portions.

**Table 1**

| Example | Venturi Inlet Radius cm (in) | Venturi Throat Int. Dia. cm (in) | Venturi Throat Length cm (in) | Venturi Throat l/D | Venturi Cone Length cm (in) | Venturi Cone l/D | Venturi Cone Half Angle |
|---|---|---|---|---|---|---|---|
| 9 | 3.8 (1.5) | 7.0 (2.75) | 18.0 (7.1) | 2.6 | 39.4 (15.5) | 5.6 | 3.5 |
| 10 | 3.8 (1.5) | 9.2 (3.63) | 36.3 (14.3) | 3.9 | 39.4 (15.5) | 5.6 | 3.5 |
| 11 | 3.8 (1.5) | 7.0 (2.75) | 8.9 (3.5) | 1.3 | 39.4 (15.5) | 5.6 | 3.5 |
| 12 | 3.8 (1.5) | 5.7 (2.25) | 27.2 (10.7) | 4.7 | 39.4 (15.5) | 5.6 | 3.5 |
| 13 | 3.8 (1.5) | 7.0 (2.75) | 26.9 (10.6) | 3.9 | 39.4 (15.5) | 5.6 | 3.5 |
| 14 | 3.8 (1.5) | 7.0 (2.75) | 48.9 (19.3) | 7 | 39.4 (15.5) | 5.6 | 3.5 |

To assess the results of modifying the venturi throat portion, computational fluid dynamics, CFD, were used to evaluate the configurations summarized in Table 1. FLUENT™ software from Fluent Inc. was used to perform the analysis. (Fluent, Inc., USA, 10 Cavendish Court, Centerra Resource Park, Lebanon, N.H., 03766-1442). The fluid flows calculated for the various venturi designs are summarized in Table 2 below.

**Table 2**

| Example | Total mass flow (kg/sec) | Fuel Mass flow (kg/sec) | Air + FGR Mass Flow (kg/sec) | Change in Total Mass Flow versus Ex. 1 |
|---|---|---|---|---|
| 9 | 0.1827 | 0.0328 | 0.1499 | Base |
| 10 | 0.1685 | 0.0328 | 0.1357 | 92% |
| 11 | 0.1751 | 0.0328 | 0.1423 | 96% |
| 12 | 0.2064 | 0.0328 | 0.1736 | 119% |
| 13 | 0.1999 | 0.0328 | 0.1671 | 109% |
| 14 | 0.2292 | 0.0328 | 0.1964 | 125% |

As will be seen from Table 2, except for the burner of Example 10, increasing the length/diameter ratio of the venturi throat portion increased the total mass flow through the burner tube. For a given flow rate, in addition to an optimum L/D ratio, there is also an optimum diameter for the venturi. If the diameter is too small, it causes excessive frictional losses that limit the venturi capacity. If the diameter is too big (as in Example 10), flow separation occurs in the throat, which also reduces capacity.

Although increasing the length and hence the length/diameter ratio of the venturi throat portion increases the total mass flow through the burner tube, frictional losses overtake the advantage of increased flow if the throat portion becomes too long. Thus, the length/diameter ratio of the venturi throat portion should preferably not exceed 10, more preferably is between 6.5 and 7.5 and most preferably is between 6.5 and 7.0.

Finally, data illustrating the benefit of the FGR duct sizing teachings included herein are next presented.

CFD was used to evaluate the configurations described below. A CFD analysis solves fundamental controlling equations and provides fluid velocity, species, combustion reactions, pressure, heat transfer and temperature values, etc. at every point in the solution domain. FLUENT™ software from Fluent Inc. was used to perform the analysis.

Example 15

In order to demonstrate the benefits of the present invention, the operation of a pre-mix burner employing flue gas recirculation of the type described in U.S. Patent 5,092,761 (as depicted in FIG. 5 of said patent), was simulated to establish the baseline data using the FLUENT™ software package. Results of the detailed material and energy balance calculated using the FLUENT™ computational fluid dynamics software yielded a mass flow rate of about 282 kilograms per hour (620 pounds per hour) for the baseline burner for an FGR duct having a 10.2 cm (4.0 in) by 17.8 cm (7 in), 181 square cm (28 square in) total rectangular cross-sectional area is employed. This equates to an FGR rate of about 10%.

Example 16

In this example, a detailed material and energy balance was calculated using the FLUENT™ computational fluid dynamics software and showed that with a larger FGR duct of 12.1 cm (4.75 in) by 22.9 cm (9 in) (total 277 square cm (43 square in)), the mass flow rate through the FGR duct rises to 417 kg/hr (920 lb/hr). This can be expected to increase the FGR rate by about 50%, to a total of about 15%. Such FGR rate increase is expected to reduce the NOx emissions of the burner.

As may be appreciated by those skilled in the art, the present invention can be incorporated in new burners or can be retrofitted into existing burners by alterations to the burner surround.

Although the burners of this invention have been described in connection with floor-fired hydrocarbon cracking furnaces, they may also be used in furnaces for carrying out other reactions or functions.

It will also be understood that the teachings described herein also have utility in traditional raw gas burners and raw gas burners having a pre-mix burner configuration wherein flue gas alone is mixed with fuel gas at the entrance to the burner tube. In fact, it has been found that the pre-mix, staged-air burners of the type described in detail herein can be operated with the primary air damper doors closed, with very satisfactory results.

**Claims**

**1.** A burner (10) for the combustion of fuel in a furnace, said burner comprising:

(a) a primary air chamber (26);
(b) a burner tube (12) having an upstream end (16), a downstream end (18) and a venturi (19) intermediate said upstream and downstream ends, said venturi including a throat portion (19a) having substantially constant internal cross-sectional dimensions such that the ratio of the length to maximum internal cross-sectional dimension of said throat portion is at least 3;
(c) a fuel spud (24) located adjacent the upstream end of said burner tube, for introducing fuel into said burner tube;
(d) a burner tip (20) mounted on the downstream end of said burner tube adjacent a first opening in the furnace;
(e) at least one passageway (76) having a first end and a second end adjacent the upstream end of said burner tube; and
(f) means for drawing flue gas from said furnace, through said at least one passageway, in response to an inspirating effect of uncombusted fuel exiting the fuel spud, said uncombusted fuel flowing through said burner tube from its upstream end towards its downstream end;
wherein said fuel spud includes means for increasing the inspirating effect of uncombusted fuel exiting said fuel spud and further comprising a centering plate (60) for centering said fuel spud in alignment with said burner tube, **characterized in that** said centering plate is perforated to permit flow therethrough from said primary air chamber.

2. The burner according to claim 1, wherein the ratio of the length to maximum internal cross-sectional dimension of said throat portion is from 4 to 10.

3. The burner according to claim 1 or claim 2, further comprising one or more steam tubes terminating adjacent the upstream end of said burner tube for introducing steam into said burner tube along with air and said fuel.

4. The burner according to any preceding claim, wherein said at least one passageway comprises a passageway, which is internal to the burner.

5. The burner according to claim 1, claim 2 or claim 3, wherein said at least one passageway is at least partially external to the furnace and is in fluid communication with a plurality of burners in the furnace.

6. The burner according to any preceding claim, wherein said means for drawing flue gas further comprises a first adjustable damper opening in fluid communication with said primary air chamber and a source of air.

7. The burner according to claim 6, further comprising a secondary air chamber, and a second adjustable damper opening into said secondary air chamber to restrict the amount of air entering into said secondary air chamber, said secondary air chamber being in fluid communication with at least one air opening into the furnace.

8. The burner according to claim 7, further comprising at least one air port in fluid communication with said secondary air chamber.

9. The burner according to claim 1, wherein said centering plate has an outer ring member, an inner centering member and a plurality of radially extending spokes connecting said outer ring member and said inner centering member.

10. The burner according to claim 9, wherein said outer ring member fixedly secures said centering plate within said primary air chamber, and wherein a gas riser extends through said inner centering member and is supported thereby.

11. The burner according to any preceding claim, further comprising means for injecting steam into said primary air chamber.

12. The burner according to any preceding claim, wherein said burner is a pre-mix burner.

13. The burner according to any preceding claim, wherein said burner is a flat-flame burner.

14. The burner according to any preceding claim, wherein the fuel is fuel gas.

15. The burner according to any preceding claim, wherein said means for increasing the inspirating effect of uncombusted fuel exiting said fuel spud is a smoothly profiled outer surface of said fuel spud, said outer surface capable of reducing flow separation and flow eddies as air and flue gas pass over said fuel spud into said upstream end of said burner tube.

16. The burner according to any preceding claim, wherein said means for increasing the inspirating effect of uncombusted fuel exiting said fuel spud further includes a converging/diverging Laval nozzle formed within said fuel spud.

17. The burner according to claim 16, further comprising a fuel supply control system, said fuel supply control system including a heater for heating the fuel prior to entering the burner to a temperature effective to maximize the velocity of the fuel exiting the Laval nozzle of said fuel spud.

18. The burner according to any preceding claim wherein said burner tip comprises a plurality of center burner tip openings in an external surface thereof so that combustion of the fuel takes place downstream of said external surface of said burner tip, the number and dimensions of said center burner tip openings in said external surface being such that the ratio of the total area of the center burner tip openings in said external surface is at least 2.2 square mm per joules/sec (1 square inch per million (MM) Btu/hr) burner capacity.

**19.** The burner according to any preceding claim wherein the cross-sectional area of the passageway comprises a major dimension and a minor dimension ranging from 30% to 100% of said major dimension.

**20.** The burner according to any preceding claim, further comprising at least one steam tube for introducing steam into said at least one passageway upstream of the source of air.


**Patentansprüche**

**1.** Brenner (10) zur Verbrennung von Brennstoff in einem Ofen, wobei der Brenner aufweist:

(a) eine Primärluftkammer (26),
(b) ein Brennerrohr (12) mit einem Eingangsende (16), einem Ausgangsende (18) und einer Venturidüse (19) zwischen dem Eingangs- und dem Ausgangsende, wobei die Venturidüse einen Halsbereich (19a) mit einem im Wesentlichen konstanten inneren Querschnittsmaß einschließt, sodass das Verhältnis der Länge zum höchsten inneren Querschnittsmaß des Halsbereichs mindestens 3 beträgt,
(c) einen Brennstoffstutzen (24), der sich neben dem Eingangsende des Brennerrohrs befindet, zum Einbringen von Brennstoff in das Brennerrohr,
(d) eine Brennerspitze (20), die an dem Ausgangsende des Brennerrohrs neben einer ersten Öffnung in dem Ofen befestigt ist,
(e) mindestens einen Durchgang (76) mit einem ersten Ende und einem zweiten Ende neben dem Eingangsende des Brennerrohrs und
(f) Mittel zum Abziehen von Abgas aus dem Ofen, durch mindestens einen Durchgang, als Reaktion auf eine Mitreißwirkung von unverbranntem Brennstoff, der aus dem Brennstoffstutzen austritt, wobei der unverbrannte Brennstoff durch das Brennerrohr von dessen Eingangsende zu dessen Ausgangsende strömt, wobei der Brennstoffstutzen Mittel zum Erhöhen der Mitreißwirkung von unverbranntem Brennstoff, der aus dem Brennstoffstutzen austritt, einschließt, und ferner eine Zentrierplatte (60) zum Zentrieren des Brennstoffstutzens, mit dem Brennerrohr ausgerichtet, aufweist, **dadurch gekennzeichnet, dass** die Zentrierplatte perforiert ist, um eine Strömung durch sie hindurch aus der Primärluftkammer zu ermöglichen.

**2.** Brenner nach Anspruch 1, wobei das Verhältnis der Länge zum höchsten inneren Querschnittsmaß des Halsbereichs 4 bis 10 beträgt.

**3.** Brenner nach Anspruch 1 oder Anspruch 2, der ferner ein oder mehrere Dampfrohre aufweist, die neben dem Eingangsende des Brennerrohrs enden, zum Einbringen von Dampf zusammen mit Luft und dem Brennstoff in das Brennerrohr.

**4.** Brenner nach einem der vorhergehenden Ansprüche, wobei mindestens einer der Durchgänge einen Durchgang einschließt, der in dem Brenner innen ist.

**5.** Brenner nach Anspruch 1, Anspruch 2 oder Anspruch 3, wobei der mindestens eine Durchgang zumindest teilweise außerhalb des Ofens ist und sich in Fluidkommunikation mit einer Mehrzahl von Brennern in dem Ofen befindet.

**6.** Brenner nach einem der vorhergehenden Ansprüche, wobei das Mittel zum Abziehen von Abgas ferner eine erste einstellbare Dämpferöffnung in Fluidkommunikation mit der Primärluftkammer und einer Quelle für Luft aufweist.

**7.** Brenner nach Anspruch 6, der ferner eine Sekundärluftkammer und eine zweite einstellbare Dämpferöffnung in die Sekundärluftkammer aufweist, um die Menge an Luft zu begrenzen, die in die Sekundärluftkammer eintritt, wobei die Sekundärluftkammer in Fluidkommunikation mit mindestens einer Luftöffnung in den Ofen steht.

**8.** Brenner nach Anspruch 7, der ferner mindestens einen Luftanschluss in Fluidkommunikation mit der Sekundärluftkammer besitzt.

**9.** Brenner nach Anspruch 1, wobei die Zentrierplatte ein äußeres Ringelement, ein inneres Zentrierelement und eine Mehrzahl von sich nach außen erstreckenden Speichen aufweist, die das äußere Ringelement und das innere Zentrierelement verbinden.

**10.** Brenner nach Anspruch 9, wobei das äußere Ringelement die Zentrierplatte in der Primärluftkammer sicher befestigt, und wobei sich ein Gassteigrohr durch das innere Zentrierelement erstreckt und davon gehalten wird.

11. Brenner nach einem der vorhergehenden Ansprüche, der ferner Mittel zum Einbringen von Dampf in die Primärluftkammer aufweist.

12. Brenner nach einem der vorhergehenden Ansprüche, wobei der Brenner ein Vormischbrenner ist.

13. Brenner nach einem der vorhergehenden Ansprüche, wobei der Brenner ein Flachflammenbrenner ist.

14. Brenner nach einem der vorhergehenden Ansprüche, wobei der Brennstoff ein Brennstoffgas ist.

15. Brenner nach einem der vorhergehenden Ansprüche, wobei das Mittel zum Erhöhen der Mitreißwirkung von unverbranntem Brennstoff, der aus dem Brennstoffstutzen austritt, eine im Profil glatte äußere Oberfläche des Brennstoffstutzens ist, wobei die äußere Oberfläche in der Lage ist, Strömungstrennung und Strömungswirbel zu vermindern, während Luft und Abgas über den Brennstoffstutzen in das Eingangsende des Brennstoffrohrs geleitet werden.

16. Brenner nach einem der vorhergehenden Ansprüche, wobei das Mittel zum Erhöhen der Mitreißwirkung von unverbranntem Brennstoff, der an dem Brennstoffstutzen austritt, eine zusammenlaufende/auseinanderlaufende Laval-Düse einschließen, die in dem Brennstoffstutzen gebildet ist.

17. Brenner nach Anspruch 16, der ferner ein Brennstoffzufuhrkontrollsystem aufweist, wobei das Brennstoffzufuhrkontrollsystem einen Heizer zum Erhitzen des Brennstoffs vor dem Eintreten in den Brenner auf eine Temperatur einschließt, die wirksam ist, um die Geschwindigkeit des aus der Laval-Düse des Brennstoffstutzens austretenden Brennstoffs zu maximieren.

18. Brenner nach einem der vorhergehenden Ansprüche, wobei die Brennerspitze eine Mehrzahl von Zentralbrennerspitzenöffnungen in dessen äußerer Oberfläche umfasst, sodass die Verbrennung des Brennstoffs stromabwärts von der äußeren Oberfläche der Brennerspitze stattfindet, wobei die Zahl und Maße der Zentralbrennerspitzenöffnungen in der äußeren Oberfläche so sind, dass das Verhältnis der Gesamtfläche der Zentralbrennerspitzenöffnungen in der äußeren Oberfläche mindestens 2,2 mm$^2$ je Joule/Sekunde (1 Quadratzoll je Millionen (MM) Btu/h) Brennerkapazität beträgt.

19. Brenner nach einem der vorhergehenden Ansprüche, wobei die Querschnittsfläche des Durchgangs ein größeres Maß und ein geringeres Maß im Bereich von 30 % bis 100 % des größeren Maßes besitzt.

20. Brenner nach einem der vorhergehenden Ansprüche, der ferner mindestens ein Dampfrohr zum Einbringen von Dampf in den Durchgang stromaufwärts von der Quelle für Luft besitzt.

**Revendications**

1. Brûleur (10) pour la combustion de combustible dans un four, ledit brûleur comprenant :

(a) une chambre à air primaire (26) ;
(b) un tube de brûleur (12) ayant une extrémité amont (16), une extrémité aval (18) et un venturi (19) entre lesdites extrémités amont et aval, ledit venturi comprenant une portion d'étranglement (19a) ayant des dimensions en section transversale internes essentiellement constantes de telle sorte que le rapport de la longueur à la dimension en section transversale interne maximale de ladite portion d'étranglement soit d'au moins 3 ;
(c) un raccord à combustible (24) situé en position adjacente à l'extrémité amont dudit tube de brûleur pour introduire du combustible dans ledit tube de brûleur ;
(d) une pointe de brûleur (20) montée sur l'extrémité aval dudit tube de brûleur en position adjacente à une première ouverture dans le four ;
(e) au moins un passage (76) ayant une première extrémité et une deuxième extrémité adjacente à l'extrémité amont dudit tube de brûleur ; et
(f) un moyen pour aspirer des gaz de fumée depuis ledit four, à travers ledit au moins un passage, en réponse à un effet d'aspiration du combustible non brûlé sortant du raccord à combustible, ledit combustible non brûlé s'écoulant à travers ledit tube de brûleur depuis son extrémité amont vers son extrémité aval ;
ledit raccord à combustible comportant un moyen pour augmenter l'effet d'aspiration du combustible non brûlé sortant dudit raccord à combustible et comprenant en outre une plaque de centrage (60) pour centrer ledit raccord à combustible en alignement avec ledit tube de brûleur, **caractérisé en ce que** ladite plaque de centrage est perforée de manière à permettre un écoulement à travers elle depuis ladite chambre à air primaire.

2. Brûleur selon la revendication 1, dans lequel le rapport de la longueur à la dimension en section transversale interne maximale de ladite portion d'étranglement est compris entre 4 et 10.

3. Brûleur selon la revendication 1 ou la revendication 2, comprenant en outre un ou plusieurs tubes de vapeur se terminant en position adjacente à l'extrémité amont dudit tube de brûleur pour introduire de la vapeur dans ledit tube de brûleur conjointement avec de l'air et ledit combustible.

4. Brûleur selon l'une quelconque des revendications précédentes, dans lequel ledit au moins un passage comprend un passage qui est interne au brûleur.

5. Brûleur selon la revendication 1, la revendication 2 ou la revendication 3, dans lequel ledit au moins un passage est au moins en partie extérieur au four et est en communication fluidique avec une pluralité de brûleurs dans le four.

6. Brûleur selon l'une quelconque des revendications précédentes, dans lequel ledit moyen pour aspirer les gaz de fumée comprend en outre une première ouverture d'amortissement ajustable en communication fluidique avec ladite chambre à air primaire et une source d'air.

7. Brûleur selon la revendication 6, comprenant en outre une chambre à air secondaire et une deuxième ouverture d'amortissement ajustable dans ladite chambre à air secondaire pour limiter la quantité d'air entrant dans ladite chambre à air secondaire, ladite chambre à air secondaire étant en communication fluidique avec au moins une ouverture d'air dans le four.

8. Brûleur selon la revendication 7, comprenant en outre au moins un orifice d'air en communication fluidique avec ladite chambre à air secondaire.

9. Brûleur selon la revendication 1, dans lequel ladite plaque de centrage présente un organe annulaire extérieur, un organe de centrage intérieur et une pluralité de rayons s'étendant radialement reliant ledit organe annulaire extérieur et ledit organe de centrage intérieur.

10. Brûleur selon la revendication 9, dans lequel ledit organe annulaire extérieur fixe solidement ladite plaque de centrage à l'intérieur de ladite chambre à air primaire et dans lequel une colonne montante de gaz s'étend à travers ledit organe de centrage intérieur et est supportée par celui-ci.

11. Brûleur selon l'une quelconque des revendications précédentes, comprenant en outre un moyen pour injecter de la vapeur dans ladite chambre à air primaire.

12. Brûleur selon l'une quelconque des revendications précédentes, dans lequel ledit brûleur est un brûleur à prémélange.

13. Brûleur selon l'une quelconque des revendications précédentes, dans lequel ledit brûleur est un brûleur à flamme plate.

14. Brûleur selon l'une quelconque des revendications précédentes, dans lequel le combustible est un gaz combustible.

15. Brûleur selon l'une quelconque des revendications précédentes, dans lequel ledit moyen pour augmenter l'effet d'aspiration du combustible non brûlé sortant dudit raccord à combustible est une surface extérieure de profil lisse dudit raccord à combustible, ladite surface extérieure étant capable de réduire la séparation de l'écoulement et les tourbillons de l'écoulement à mesure que l'air et les gaz de fumée passent par-dessus ledit raccord à combustible jusque dans ladite extrémité amont dudit tube de brûleur.

16. Brûleur selon l'une quelconque des revendications précédentes, dans lequel ledit moyen pour augmenter l'effet d'aspiration du combustible non brûlé sortant dudit raccord à combustible comporte en outre une buse de Laval convergente/divergente formée à l'intérieur dudit raccord à combustible.

**17.** Brûleur selon la revendication 16, comprenant en outre un système de commande d'alimentation en combustible, ledit système de commande d'alimentation en combustible comportant un dispositif de chauffage pour chauffer le combustible avant qu'il n'entre dans le brûleur à une température efficace pour maximiser la vitesse du combustible sortant de la buse de Laval dudit raccord à combustible.

**18.** Brûleur selon l'une quelconque des revendications précédentes, dans lequel ladite pointe de brûleur comprend une pluralité d'ouvertures de pointe de brûleur centrales dans une surface extérieure de celle-ci, de telle sorte que la combustion du combustible ait lieu en aval de ladite surface extérieure de ladite pointe de brûleur, le nombre et les dimensions desdites ouvertures de pointe de brûleur centrales dans ladite surface extérieure étant tels que le rapport de la superficie totale des ouvertures de pointe de brûleur centrales dans ladite surface extérieure soit d'au moins 2,2 mm$^2$ par joule/s (1 pouce carré par million (MM) Btu/hr) de capacité du brûleur.

**19.** Brûleur selon l'une quelconque des revendications précédentes, dans lequel la superficie en section transversale du passage comprend une dimension majeure et une dimension mineure correspondant à 30 % à 100 % de ladite dimension majeure.

**20.** Brûleur selon l'une quelconque des revendications précédentes, comprenant en outre au moins un tube de vapeur pour introduire de la vapeur dans ledit au moins un passage en amont de la source d'air.

## FIG. 1

*FIG. 2*

*FIG. 3*

EP 1 495 262 B1

FIG. 4

20

FIG. 5

FIG. 6A

FIG. 6B

FIG. 7

FIG. 8

EP 1 495 262 B1

FIG. 9

# FIG. 10

External FGR vs. Internal FGR

% EFGR

▲ EFGR Burner 0 Steam
◆ EFGR Burner 79 lb/hr Steam
□ EFGR Burner 133 lb/hr Steam
✕ 15% IFGR, 0 Steam
■ 15% IFGR, 133 lb/hr Steam

## FIG. 11A

## FIG. 11B

*FIG. 11C*

12

$D_{Exit}$

224

$D_{Throat}$

227

Air
(and Flue Gas)

Fuel

## FIG. 11D

## FIG. 11E

# FIG. 12A

400

410    406
P

Fuel
Supply

to Individual Burners 450
450
450
450    450
450 450
450    450

# FIG. 12B

500

Heating
Fluid

F    510

P

Fuel
Supply

518
Heat
Exchanger

to Individual Burners
550    550
550    550
550 550
550    550

FIG. 13A

FIG. 13B

EP 1 495 262 B1

*FIG. 14*

33

## FIG. 15

## FIG. 16A

## FIG. 16B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4257763 A
- US 5092761 A
- EP 0374423 A
- EP 1096202 A1
- EP 1098202 A1
- US 4629413 A